# DEMANDE DE BREVET EUROPEEN

(11) **EP 1 122 963 A1**
(43) Date de publication de la demande: **08.08.2001**
(21) Numéro de dépôt: 01400274.5
(22) Date de dépôt: 02.02.2001
(51) Int. Cl.: H04Q 7/34, H04Q 7/20

(54) **Réseau téléphonique d'entreprise**

(30) Priorité: 04.02.2000 FR 0001421
(71) Demandeur: ALCATEL, 75008 Paris (FR)
(72) Inventeur: Rousseau, Jean-René, 95000 Neuville S/Oise (FR)
(74) Mandataire: Sciaux, Edmond

(57) **Abrégé**

L'invention concerne un équipement de télécommunication (10) pour l'établissement local de liaisons téléphoniques entre des radiotéléphones GSM (1) appartenant à un réseau privé, avec un réseau radio-téléphonique public GSM (5). Cet équipement comporte un moyen de raccordement au réseau public et un moyen de liaison avec chaque radiotéléphone de ce réseau privé.

Pour le raccordement avec le réseau public, il comporte un système aval (3) d'accès hertzien à des stations de base radio (5) du réseau public. Pour la liaison avec les radiotéléphones (1) de ce réseau privé, il comporte un système amont (2) d'accès hertzien appliquant la norme GSM comme le réseau public. L'équipement comporte en outre un module de conversion (4) de signaux de services, interposé entre le système amont (2) et le système aval (3).

## Description

L'invention concerne le domaine de la téléphonie cellulaire, et plus particulièrement le domaine de la desserte locale d'un site privé disposant d'un réseau local privé de télécommunication.

Le document EP 1.032.225 décrit un réseau privé de télécommunication, comportant un autocommutateur, des terminaux filaires, de terminaux mobiles DECT, et des terminaux mobiles GSM classiques. Un serveur et des stations de base, de type GSM, permettent aux terminaux GSM de profiter de tous les services procurés par un autocommutateur privé, notamment l'établissement de communications avec d'autre terminaux appartenant au même réseau privé.

Les équipements comprenant des bases radio ou des sous-systèmes radio sont généralement raccordés par liens numériques. Dans le cadre d'un sous-système radio GSM (appelé BSS) les protocoles de signalisation échangés entre le BSS et le réseau sont basés sur le système de signalisation connu sous le nom de système de signalisation n° 7, peu optimisé pour raccorder des sites de petite capacité.

Le but visé par l'invention est de raccorder un tel réseau privé, par exemple un réseau d'entreprise, à un réseau de télécommunication public, en évitant le mode de raccordement classique d'un sous-système radio GSM (appelé BSS) à un réseau public, à savoir une interface appelée A dans la terminologie GSM, généralement via un lien numérique à 2 Mégabits/s.

L'objet de l'invention est un équipement de télécommunication pour l'établissement local de liaisons téléphoniques entre au moins un radiotéléphone appartenant à un réseau privé, avec un réseau public, comportant :
- un système aval d'accès hertzien établissant une liaison aval vers au moins une station de base d'un réseau radio téléphonique public ;
- et un système amont d'accès hertzien établissant une liaison amont avec un téléphone radio téléphone de ce réseau privé,
**caractérisé** en ce que le système amont et le système aval appliquent une même norme radiotéléphonique, qui est celle du réseau radiotéléphonique public,
et en ce qu'il comporte en outre un module de conversion de signaux de services, interposé entre le système amont et le système aval, pour :
- répéter les signaux qu'il reçoit, d'une part du système amont et d'autre part du système aval, en les adaptant respectivement aux caractéristiques de la liaison aval et aux caractéristiques de la liaison amont ;
- et extraire de ces signaux de signalisation, puis enregistrer dans une base de données locale, des informations propres aux radiotéléphones appartenant à ce réseau privé, et permettant de gérer des communications entre les terminaux appartenant à ce réseau privé.

L'équipement ainsi caractérisé assure un rôle de répéteur radio qui est simplifiée par le fait que la liaison amont et la liaison aval appliquent une même norme qui est celle du réseau radiotéléphonique public. Cet équipement n'est cependant pas limité à la fonction de répéteur radio (ré-amplification du signal) car il réalise aussi l'interprétation des couches de protocole GSM appelé BSS AP en vue de gérer deux liaisons radio en série : une entre le réseau public et l'équipement, et une autre entre l'équipement et un terminal radio téléphonique. Il répète les signaux de service qu'il reçoit, d'une part du système amont et d'autre part du système aval, mais en les adaptant respectivement aux caractéristiques de la liaison aval et aux caractéristiques de la liaison amont.

D'autre part, il joue le rôle de contrôleur de station de base et de commutateur du service mobile, permettant des communications internes au réseau privé, puisqu'il extrait de ces signaux de signalisation, puis enregistre dans une base de données locale, des informations propres aux radiotéléphones appartenant à ce réseau privé, et permettant de gérer des communications entre les terminaux appartenant à ce réseau privé.

De préférence, le système aval comprend un moyen pour simuler des liens de type terminal mobile et le système amont comprend un moyen pour simuler des liens de type station de base.

Selon une variante avantageuse, l'équipement selon l'invention comprend une pluralité de connecteurs pour recevoir des cartes d'abonnement au réseau public.

Selon un mode de réalisation particulier, le système aval ou le module de conversion dispose de plusieurs modules d'identification d'abonnés du réseau public, le choix du (des) module(s) utilisé(s) étant réalisé par ledit module de conversion.

Avantageusement, l'équipement comporte des moyens de choix du module utilisé commandé par au moins un critère lié à l'abonnement, tel que l'identité de l'opérateur.

Selon une variante, le module de conversion détecte que le terminal dispose d'un abonnement au réseau radio téléphonique publique public grâce à une base de données, et assure le transfert sans utiliser l'une des ressources d'abonnement du système aval.

Cet équipement apporte un lien radio assurant le service de transport d'information, mais une partie de l'information échangée est réalisée entre les terminaux GSM (par leur carte SIM) et l'infrastructure réseau. Vu du réseau GSM, cet équipement simule des liens du type utilisé classiquement par des terminaux mobiles.

L'invention permet d'offrir aux terminaux du réseau privé une couverture radio locale et leur offrir un accès aux stations de base du réseau public.

L'équipement comporte en outre un équipement de traitement d'appel ayant pour fonction de comprendre les requêtes des terminaux et d'établir un appel.

Dans un cas, par exemple, de requête d'appel extérieur, l'ensemble pourra se limiter à une fonction de répéteur.

Dans un autre cas, ce même ensemble pourra prendre en charge l'appel et lui apporter un traitement approprié (exemple : routage vers un réseau fixe ou établissement d'un appel vers un autre mobile).

Dans ce contexte, cet ensemble apparaît comme un système BSS standard pour le terminal, mais apparaît comme un ou plusieurs terminaux pour le sous système radio BSS du réseau public.

Cet équipement permet d'offrir une solution optimisée pour le raccordement de sites de petite capacité. Il permet d'offrir aux terminaux sur le site de l'entreprise l'ensemble des services disponibles sur le réseau public, du fait du lien radio, et d'accueillir des visiteurs sur le site de l'entreprise, en l'utilisant comme répéteur.

Elle permet également de déplacer l'ensemble de l'entreprise sans apporter de modifications dans le réseau d'infrastructure. Ceci est particulièrement utile dans le cadre d'évènements temporaires comme des expositions.

Lorsqu'un système radio cellulaire au sein d'une entreprise est mis en place pour offrir un service local et l'accès au monde extérieur via le réseau cellulaire, un lien direct de raccordement d'une station de base ou d'un BSS est utilisé. Ce lien utilise des protocoles de réseau cellulaire définis entre les équipements fixes. L'invention permet d'offrir un service identique en apportant en outre la mobilité de l'ensemble de l'installation de l'entreprise.

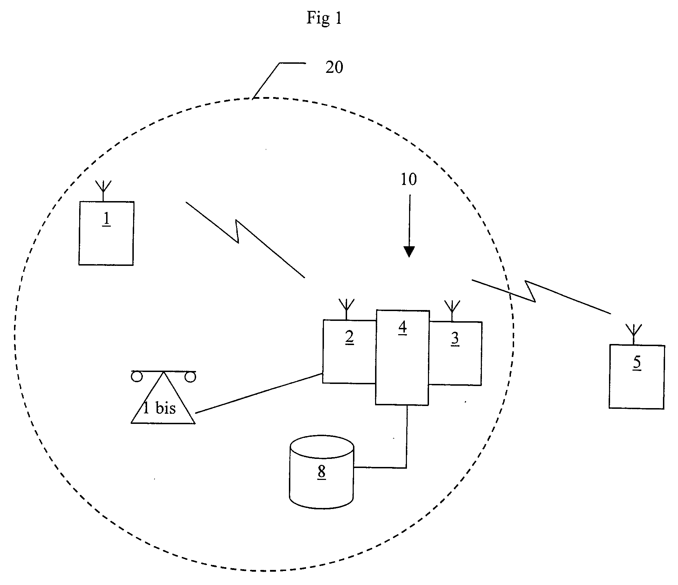

L'invention sera mieux comprise à la lecture de la description qui suit, se référant à un exemple non limitatif de réalisation et aux figures annexées où la **figure 1** unique représente le schéma de principe d'une installation conforme à l'invention.

L'équipement selon l'invention concerne un équipement 10 pour l'établissement de liaison avec des téléphones cellulaires 1 classiques, de type GSM par exemple, des postes filaires 1 bis, et éventuellement des téléphones sans fil de type DECT non représentés, à l'intérieur du périmètre 20 d'un site privé, par exemple un parc d'exposition.

L'équipement 10 comprend :
- un système amont 2 comportant un émetteur-récepteur radiofréquence et les circuits électroniques pour l'établissement de liaisons dites amonts, de type GSM, avec les téléphones cellulaires GSM locaux 1 ;
- un système aval 3 comportant un émetteur-récepteur radiofréquence et les circuits électroniques pour l'établissement d'une liaison dite aval, de type GSM, avec la station de base 5 du réseau GSM public ;
- un module de conversion 4 pour la conversion des signaux.

La communication entre le téléphone mobile 1 et le système amont 2 de l'équipement 20 s'effectue selon un protocole similaire à celui pour l'établissement et le maintien d'une liaison entre un téléphone cellulaire et une station de base BTS du réseau radiotéléphonique GSM public.

Les signaux échangés entre le téléphone mobile 1 et le système amont 2 comprennent des signaux de service spécifiques à la norme mise en oeuvre, GSM dans cet exemple. En particulier des paramètres, tels qu'un identifiant du téléphone mobile 1, un identifiant de l'abonné, et les mesures effectuées par le téléphone mobile (niveau et qualité de réception des signaux émis par les stations de base BTS). Les signaux de services comprennent en particulier, dans le cas de la norme GSM, ou des normes DCS, PCS, UMTS qui sont des adaptations de cette norme GSM :
- le type de communication (appel à partir du mobile, ou au contraire reçu par le mobile) ;
- communication avec ou sans décroché du correspondant ;
- nature de la communication (voix ou données) ;
- classe du mobile (puissance maximale qu'il peut émettre) ;
- identité de l'abonné (IMSI - identité internationale d'un abonné, TMSI - identité temporaire d'un abonné) ;
- l'identifiant du téléphone mobile (IMEI - n° de série) ;
- le numéro du canal et du sous-canal ;
- des informations temporelles telles que le décalage temporel d'émission ;
- des informations relatives aux signaux reçus par la station de base :
- la puissance moyenne à laquelle le signal du téléphone mobile est reçu par la station de base, sur l'ensemble de la période écoulée depuis la dernière valeur de puissance fournie ;
- la puissance moyenne à laquelle le signal du téléphone mobile est reçu par la station de base, sur un sous-ensemble de la période écoulée depuis la dernière valeur de puissance fournie ;
- l'emploi ou non du DTX suppression des périodes sans voix au cours d'une communication pour les échanges dans le sens BTS vers MS ;
- les informations réseaux telles que Changement de cellule, coupures de communications sur problèmes, etc.

Ces informations sont extraites des signaux de service et sont enregistrées par le système amont 2 pour former le descriptif d'une communication locale.

Ces informations sont extraites par une carte de capture et de traitement de la signalisation (non représentée). Dans le cas d'un réseau GSM, ces informations sont répertoriées dans les spécifications ETSI "Mobile Radio Interface Layer 3 specification GSM 04.08 ", " BSC-BTS Layer 3 specification GSM 08.58 ", " Radio Sub-system Link Control GSM 05.08 ", " Radio Transmission and reception GSM 05.05".

Le traitement de la signalisation, par cette carte de capture et de traitement, la met en forme en vue de son exploitation par le module de conversion 4. Ces informations contiennent entre autre les identifiants du téléphone mobile, les paramètres radio dont l'information de localisation sera dérivée, le numéro appelé, etc. Le module de conversion 4 exploite ces informations notamment pour construire la liaison aval, entre la station de base 5 dont dépend le site 20 et le système aval 3. Elle incorpore des informations enregistrées dans une base de donnée locale 8, par exemple les identités de terminal (TEI, Terminal Equipment Identity).

De la même façon, le système aval 3 et la station de base BTS 5 échangent des signaux de services spécifiques à la norme GSM, et donc similaires à ceux mentionnés ci-dessus. Mais les valeurs des signaux de services de la liaison amont et les valeurs des signaux de services de la liaison aval ne sont pas identiques. Ces signaux sont enregistrés et traités par le module de conversion 4 pour les adapter avant de les retransmettre d'une liaison à l'autre. Par exemple
- La valeur de l'avance temporelle est différente pour les deux liaisons puisqu'elles n'ont pas la même longueur.
- La négociation de la puissance d'émission ne fournit pas les mêmes valeurs de puissance pour les deux liaisons puisque les deux liaisons sont différentes, notamment parce que leurs longueurs sont différentes.
- La classe du terminal 1 n'est pas la même que celle de l'émetteur du système aval 3.
- Du côté de la liaison aval, il faut gérer un éventuel changement de station de base, si la liaison aval peut être établie avec différentes stations de bases 5, selon les conditions de transmission. Alors que ce changement ne concerne pas la liaison amont.
- Les couples de fréquences (émission-réception) sont différents pour les deux liaisons.
- les identités de cellules sont différentes pour les deux liaisons.

Le module de conversion 4 agit donc comme un répéteur radio mais elle adapte les signaux de service en fonction des caractéristiques physiques propres à chacune des deux liaisons radio, amont et aval.

En outre, le module d'interface 4 extrait de ces signaux de service des informations propres aux radiotéléphone 1 appartenant à ce réseau privé, et les enregistre dans la base de données locale 8. Ces informations sont notamment, pour chaque terminal GSM présent dans le réseau privé :
- Les information de localisation.
- L'identité temporaire d'abonné mobile TMSI.
- La clé Kc de chiffrement.
- La clé Ki d'authentification.
- Le résultat Sres d'un calcul fait dans le réseau public pour l'authentification de l'abonné.
- L'identité des algorithmes utilisés pour le chiffrement et l'authentification.

Ces informations sont utilisées par le système aval 2 pour établir des communications locales entre les radiotéléphone 1 appartenant à ce réseau privé.

## Revendications

1. Equipement de télécommunication (10) pour l'établissement local de liaisons téléphoniques entre au moins un radiotéléphone (1) appartenant à un réseau privé (20), avec un réseau public, comportant :
- un système aval (3) d'accès hertzien établissant une liaison aval vers au moins une station de base (5) d'un réseau radio téléphonique public ;
- et un système amont (2) d'accès hertzien établissant une liaison amont avec un téléphone radio téléphone(1) de ce réseau privé,
**caractérisé** en ce que le système amont (2) et le système aval (3) appliquent une même norme radiotéléphonique, qui est celle du réseau radiotéléphonique public,
et en ce qu'il comporte en outre un module de conversion (4) de signaux de service, interposé entre le système amont (2) et le système aval (3), pour :
- répéter les signaux qu'il reçoit, d'une part du système amont et d'autre part du système aval, en les adaptant respectivement aux caractéristiques de la liaison aval et aux caractéristiques de la liaison amont ;
- et extraire de ces signaux de signalisation, puis enregistrer dans une base de données locale (8), des informations propres aux radiotéléphones (1) appartenant à ce réseau privé, et permettant de gérer des communications entre les terminaux appartenant à ce réseau privé.

2. ― Equipement de télécommunication, selon la revendication 1, caractérisé en ce que le système aval (3) comprend un moyen pour simuler des liens de type terminal mobile.

3. Equipement de télécommunication selon la revendication 1 ou 2, caractérisé en ce que le système amont (2) comprend un moyen pour simuler des liens de type station de base.

4. Equipement de télécommunication selon la revendication 1, caractérisé en ce que le système aval (3) ou le module de conversion (4) comporte plusieurs modules d'identification d'abonnés du réseau radio téléphonique public,
et en ce que le module de conversion (4) comporte des moyens pour choisir un ou plusieurs module(s) d'identification.

5. Equipement de télécommunication selon la revendication 4 caractérisé en ce qu'il comporte des moyens pour choisir le module utilisé sont commandés selon au moins un critère lié à l'abonnement (par exemple l'opérateur).

6. Equipement selon la revendication 1 caractérisé en ce que le module de conversion (4) comporte des moyens pour détecter qu'un terminal radiotéléphonique (1) dispose d'un abonnement au réseau GSM public grâce à une base de données (8), et pour assurer le transfert sans utiliser l'une des ressources d'abonnement du système aval.

7. Equipement selon la revendication 1, caractérisé en ce que le système amont (2) comporte en outre des moyens (2) pour raccorder en outre au moins un téléphone filaire (1bis) ou DECT.
